# EUROPEAN PATENT SPECIFICATION

(11) **EP 4 474 721 B1**
(45) Date of publication and mention of the grant of the patent: **01.04.2026**
(21) Application number: 22939960.5
(22) Date of filing: 20.12.2022
(51) Int. Cl.: F24F 7/007, F24F 11/61, F24F 11/64, F24F 11/65, F24F 11/74, F24F 11/88, F24F 11/00, G05B 19/02

(54) **METHOD AND APPARATUS FOR CONTROLLING FRESH AIR SYSTEM, AND AIR-CONDITIONING UNIT**
VERFAHREN UND VORRICHTUNG ZUR STEUERUNG EINES FRISCHLUFTSYSTEMS UND KLIMAANLAGE
PROCÉDÉ ET APPAREIL DE COMMANDE DE SYSTÈME D'AIR FRAIS, ET UNITÉ DE CLIMATISATION

(30) Priority: 26.04.2022 CN 202210445485
(43) Date of publication of application: 11.12.2024
(73) Proprietor: Gree Electric Appliances, Inc. of Zhuhai, Zhuhai, Guangdong 519070 (CN)
(72) Inventor: HUANG, Zirui, Zhuhai, Guangdong 519070 (CN); DENG, Zhongwen, Zhuhai, Guangdong 519070 (CN); WENG, Yingda, Zhuhai, Guangdong 519070 (CN); JIN, Guohua, Zhuhai, Guangdong 519070 (CN); HUANG, Wenshuai, Zhuhai, Guangdong 519070 (CN)
(74) Representative: Reddie & Grose LLP
(86) International application number: PCT/CN2022/140373
(87) International publication number: WO 2023/207151

(56) References cited:
- EP-A1- 0 062 263
- CN-A- 102 396 028
- CN-A- 111 380 158
- CN-A- 112 160 888
- CN-A- 112 824 850
- CN-A- 114 719 373
- CN-U- 207 701 888
- CN-U- 212 181 287
- CN-U- 215 172 468
- CN-Y- 201 330 880
- JP-A- 2000 111 655

## Description

### TECHNICAL FIELD

The disclosure relates to the technical field of air conditioning, in particular to a method and apparatus for controlling a fresh air system, and an air conditioning unit.

### BACKGROUND

A fresh air system generally has two operation modes: an internal circulation mode and an external circulation mode, which are switched by opening and closing two air valves disposed at an inlet and an outlet. There may be situations where air valves are not fully opened or are partially opened, and whether air valves are switched in place will significantly affect the performance of the fresh air system.

Existing methods on the market for detecting whether an air valve is switched in place mostly use a mechanical mechanism, such as a switch that is struck by the air valve, which has poor accuracy and short service life. In the existing technology, a photoelectric detection is also used to check whether an air valve is switched in place. This approach can improve a service life of a detection device. However, in order to more accurately detect a switch position of the air valve, photoelectric switches are usually mounted at both open and closed positions of the air valve. This means that one air valve requires two photoelectric switches.
CN212181287U relates to an artificial intelligence butterfly valve controller comprising an AC/DC power supply module, an MCU main module, a liquid crystal display module, a button interface, a control module, a 485/4G communication module, an open position travel switch, a closed position travel switch and a butterfly valve. The AC/DC power supply module adopts an AC220V AC power supply, and the AC/DC power supply module provides corresponding DC working voltages for the MCU main module, the liquid crystal display module, the button interface, the control module, the 485/4G communication module, the open position travel switch and the closed position travel switch. The MCU main module adopts the high-speed, low-power and super-anti-interference IAP15L2K61S2 single-chip microcomputer produced by STC as the CPU, and the MCU main module collects data from each module through 4-way switch quantities, performs comparative analysis and calculation processing, and then issues control commands to the control output module through the main module, and the MCU main module also executes the commands issued by the management platform software, and the switch quantity terminal can collect and control the status of the two butterfly valves, and can also collect two-way DC voltage analog quantities.
CN201330880Y discloses an electric light control air valve which adopts a photoelectric switch for realizing the state switching of the air valve. The air valve comprises the following components: a valve body which supports and accommodates each component of air valve and is formed with a plurality of air holes; a motor which is installed on the valve body; a transmission mechanism which is installed on the valve body and is connected with the motor; a switching component which is installed in the valve body and is connected with the transmission mechanism for rotating under the driving of transmission mechanism; a light shielding component which is connected with the transmission mechanism and rotates simultaneously with the switching component; and the photoelectric switch which is installed on the valve body. The switching component is provided with switching positions which selectively communicate with or cut off corresponding air holes. The light shielding component obtains the position of photoelectric switch for switching off the photoelectric switch when the switching component is at the switching position.
CN102396028A discloses a recording medium reproducing device capable of suppressing a high cost and reducing restrictions on the design of mechanical portions when a foreign matter inserted into an insert is detected. A light emitting unit and a light receiving unit are so disposed on the inner side of an outer case near the center of the longitudinal direction of an insert as to face each other. It is decided by a [mu]-COM whether the number of times for the output waveform of the light receiving unit to change from an H-level to an L-level when a CD is inserted is even or odd. In the even case, the disc is accepted as a normal one so that the disc is clamped and then subjected to a reproducing operation. In the odd case, the disc is rejected as a foreign matter so that the disc is ejected.

### SUMMARY

According to one aspect of the present invention as defined in claim 1, there is provided a method for controlling a fresh air system having air valves equipped with photoelectric switches, wherein the air valve comprises at least a fresh air valve and a return air valve, wherein the photoelectric switch comprises at least a first photoelectric switch disposed on the fresh air valve and a second photoelectric switch disposed on the return air valve, the method comprising:
obtaining a switch state of the air valve;
detecting a voltage signal of the photoelectric switch, wherein the voltage signal comprises at least a number of times of level changes and a final level state; and
determining whether the air valve is switched in place according to the voltage signal, and controlling an operation of the fresh air system according to a determination result, comprising: if the number of times of level changes is greater than or equal to 1 and the final level state is low, determining that the air valve is switched in place, otherwise, determining that the air valve has a fault, and controlling the fresh air system to enter a standby mode or shutdown mode in a case where the fresh air valve or the return air valve has a fault.

In some embodiments, the obtaining a switch state of the air valve comprises: determining an operating mode of the fresh air system; and determining a switch state of the fresh air valve and a switch state of the return air valve according to the operating mode, wherein the operating mode comprises at least an external circulation mode in which the fresh air valve and the return air valve are both in an open state.

In some embodiments, the determining an operating mode of the fresh air system comprises: detecting an operating state of the fresh air system, wherein the operating state at least comprises a power-on state; and determining the operating mode of the fresh air system according to the operating state of the fresh air system, wherein the operating mode is the external circulation mode in a case where the operating state is the power-on state.

In some embodiments, the controlling an operation of the fresh air system according to a determination result comprises: in a case where the fresh air valve and return air valve are switched in place, obtaining an environmental parameter of an indoor environment where the fresh air system is located; and determining the operating mode of the fresh air system according to the environmental parameter, and controlling switch states of the fresh air valve and the return air valve according to the operating mode, wherein the operating mode further comprises at least an internal circulation mode in which the fresh air valve and the return air valve are both in a closed state.

In some embodiments, the method further comprises: in a case where the operating mode is the internal circulation mode, after the controlling switch states of the fresh air valve and the return air valve according to the operating mode, detecting a voltage signal of the first photoelectric switch and a voltage signal of the second photoelectric switch; and determining whether the fresh air valve and the return air valve are switched in place according to the voltage signal of the first photoelectric switch and the voltage signal of the second photoelectric switch.

In some embodiments, the method further comprises: in a case where the operating state is the power-on state, resetting the fresh air valve and the return air valve to a closed state before the determining the operating mode of the fresh air system according the operating state.

According to another aspect of the present invention as defined in claim 7, there is provided an apparatus for controlling a fresh air system having air valves equipped with photoelectric switches, wherein the air valve comprises at least a fresh air valve and a return air valve, wherein the photoelectric switch comprises at least a first photoelectric switch disposed on the fresh air valve and a second photoelectric switch disposed on the return air valve, the apparatus comprising:
an acquisition module configured to obtain a switch state of the air valve;
a detection module configured to detect a voltage signal of the photoelectric switch, wherein the voltage signal comprise at least a number of times of level changes and a final level state; and
a control module configured to determine whether the air valve is switched in place according to the voltage signal, and control an operation of the fresh air system according to a determination result, comprising: if the number of times of level changes is greater than or equal to 1 and the final level state is low, determining that the air valve is switched in place, otherwise, determining that the air valve has a fault, and controlling the fresh air system to enter a standby mode or shutdown mode in a case where the fresh air valve or the return air valve has a fault.

According to a preferred aspect of the present invention, there is provided an air conditioning unit, comprising the fresh air system and the apparatus for controlling the fresh air system as described above.

According to the invention, the fresh air system is equipped with air valves having photoelectric switches.

According to a further aspect of the present invention as defined in claim 9, there is provided a non-transitory computer-readable storage medium having stored thereon a computer program that, when executed by a processor, causes the processor to implement the method for controlling the fresh air system described above.

According to a further aspect of the present invention as defined in claim 10, there is provided an apparatus for controlling a fresh air system having an air valve equipped with a photoelectric switch, wherein the air valve comprises at least a fresh air valve and a return air valve, wherein the photoelectric switch comprises at least a first photoelectric switch disposed on the fresh air valve and a second photoelectric switch disposed on the return air valve, comprising: a processor, and a memory coupled to the processor for storing instructions that, when executed by the processor, cause the processor to perform the control method of the fresh air system described above.

According to a further aspect of embodiments of the present disclosure, there is provided a computer program, comprising: instructions that, when executed by a processor, causes the processor to perform the method for controlling a fresh air system according to any of the preceding embodiments.

### BRIEF DESCRIPTION OF THE DRAWINGS

Herein, the accompanying drawings, which are incorporated in and constitute a part of this specification, illustrate embodiments of the present disclosure and, together with the description, serve to explain the principles of the present invention.
FIG. 1 is an optional schematic diagram of an external circulation mode of a fresh air system according to some embodiments of the present disclosure;
FIG. 2 is an optional schematic diagram of an internal circulation mode of a fresh air system according to some embodiments of the present disclosure;
FIG. 3 is an optional schematic structural diagram of a fresh air valve or a return air valve according to some embodiments of the present disclosure;
FIG. 4 is an optional schematic diagram showing a closed state of the fresh air valve or the return air valve according to some embodiments of the present disclosure;
FIG. 5 is an optional schematic diagram showing a partially open state of the fresh air valve or the return air valve according to some embodiments of the present disclosure;
FIG. 6 is an optional schematic diagram showing a fully open state of the fresh air valve or the return air valve according to some embodiments of the present disclosure;
FIG. 7 is an optional flowchart of a method for controlling the fresh air system according to some embodiments of the present disclosure;
FIG. 8 is another optional flowchart of a method for controlling the fresh air system according to some embodiments of the present disclosure;
FIG. 9 is an optional block diagram of an apparatus for controlling the fresh air system according to some embodiments of the present disclosure.

### Reference Signs:

1. Photoelectric switch 2. Open position barrier; 3. Close position barrier.

### DETAILED DESCRIPTION

Exemplary embodiments will be described in detail herein with examples illustrated in the accompanying drawings. When the following description refers to the accompanying drawings, the same numerals in different drawings represent the same or similar elements unless otherwise indicated. The embodiments described in the following exemplary embodiments do not represent all embodiments consistent with the present invention. Instead, they are merely examples of devices and methods consistent with aspects of the present invention as detailed in the appended claims.

The inventors have found that in the relevant technology, two photoelectric switches per valve are required in order to accurately detect whether an air valve is switched in place in a fresh air system, which may result in resource waste. This invention provides a method and apparatus for controlling a fresh air system as well as an air conditioning unit to at least solve the problem of the resource waste caused by the need for two photoelectric switches to accurately detect whether the air valve is switched in place in the fresh air system.

This invention provides a method for controlling a fresh air system that can be directly applied to various fresh air systems having an air valve equipped with a photoelectric switch, wherein the air valve comprises at least a fresh air valve and a return air valve, and wherein the photoelectric switch comprises at least a first photoelectric switch disposed on the fresh air valve and a second photoelectric switch disposed on the return air valve, or air conditioning systems with such a fresh air system. Specifically, the method can be implemented by installing software, APPs in the above fresh air system, or writing corresponding programs into a controller.

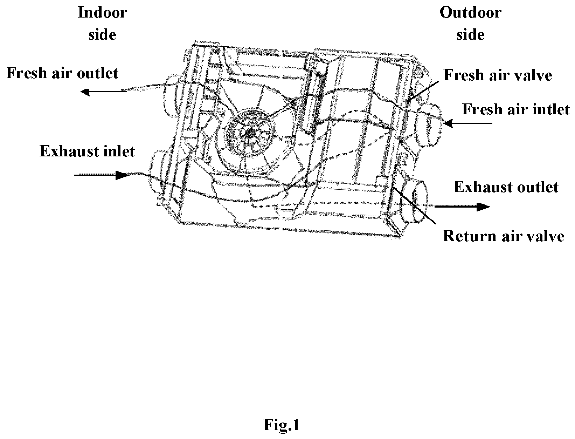

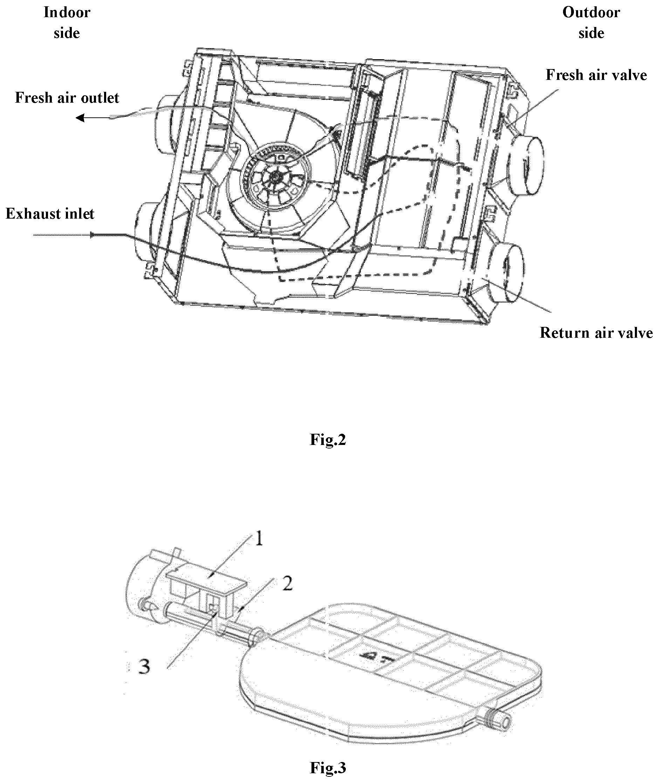

Generally, a fresh air inlet and an exhaust outlet of the fresh air system are set on a side which is an outdoor side, and a fresh air outlet and an exhaust inlet are set on a side which is an indoor side. The fresh air inlet is equipped with a fresh air valve, and the exhaust outlet is equipped with a return air valve. When the fresh air valve and the return air valve are both opened, the fresh air system operates in an external circulation mode as shown in FIG. 1. When the two valves are both closed, the fresh air system operates in an internal circulation mode as shown in FIG. 2.

FIG. 3 shows a structure of the fresh air valve or the return air valve. Two barriers are mounted on a rotating shaft of an air valve and are distinguished by position as an open position barrier 2 and a close position barrier 3. A photoelectric switch 1 is mounted on the air valve. Specifically, a first photoelectric switch is mounted on the fresh air valve, and a second photoelectric switch is mounted on the return air valve. A position relationship of the barriers and the photoelectric switch as shown in FIG. 3 (the air valve is a closed state). The rotating shaft is driven by a stepper motor, and then changes positions of the barriers (the rotating shaft rotates 90 degrees to switch the air valve from the closed state to an open state). This also causes a change in a signal of the photoelectric switch. When the photoelectric switch is blocked by the barriers, its feedback circuit will feed back a low level, and when there is no blocking, it will feed back a high level.

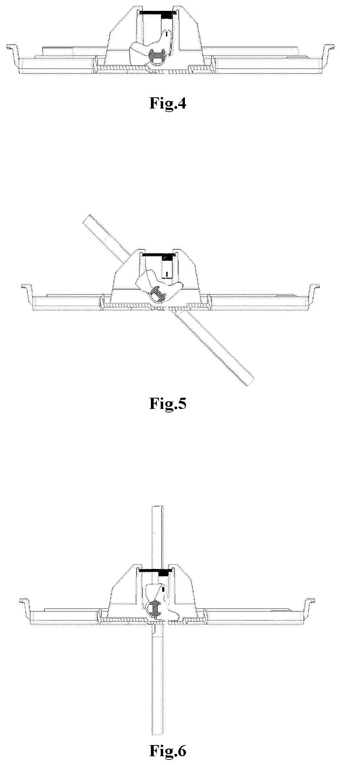

Switch states of the fresh air valve and the return air valve are extremely important. However, there may situations where the air valve may be not accurately fully opened or fully closed for some reasons (such as foreign objects in an air pipe). FIG. 4 is an optional schematic diagram showing the positional relationship between the photoelectric switch and the barriers, and the air valve is in a closed state. FIG. 5 is also an optional schematic diagram showing the positional relationship between the photoelectric switch and the barriers, and the air valve is in a partially open state. FIG. 6 is another optional schematic diagram showing the positional relationship between the photoelectric switch and the barriers, and the air valve is in a fully open state

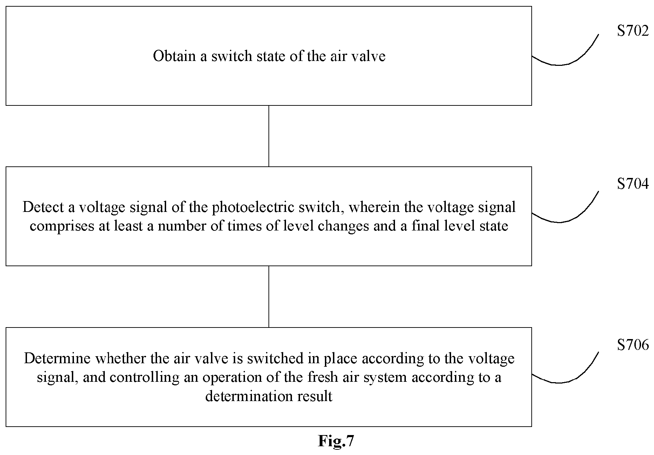

Based on the above fresh air system, this disclosure provides a method for controlling the fresh air system. Specifically, FIG. 7 shows a flowchart of the method according to some embodiments of the present disclosure. As shown in FIG. 7, the method comprises steps S702-S706.

In step S702, an switch state of an air valve is obtained.

In step S704, a voltage signal of a photoelectric switch is detected, wherein the voltage signal comprises at least a number of times of level changes and a final level state.

In step S706, whether the air valve is switched in place (fully opened/closed) is determined according to the voltage signal, and an operation of the fresh air system is controlled according to a determination result.

In the above embodiment, a scheme for controlling the fresh air system is provided, in which the photoelectric switch is provided for the air valve of the fresh air system; the voltage signal of the photoelectric switch is detected and whether the air valve is switched in place is determined based on the voltage signal. This solution can accurately detect whether the air valve is switched in place with a single photoelectric switch, which can not only solve a problem of short service life of mechanical switches, but also solve a problem of resource waste of multiple photoelectric switches, capable of simply and accurately determining whether the air valve is switched in place and saving costs.

As shown in FIG. 1, the air valve comprises at least a fresh air valve and a return air valve, and the photoelectric switch comprises at least a first photoelectric switch disposed on the fresh air valve and a second photoelectric switch disposed on the return air valve. When the fresh air valve and the return air valve are both opened, the system operates in an external circulation mode. When the two valves are both closed, the system operates in an internal circulation mode as shown in FIG. 2. When an operating mode is the external circulation mode, the fresh air valve and the return air valve are both in an open state. When the operating mode is internal circulation mode, the fresh air valve and the return air valve are both in a closed state.

Based on the above analysis, it can be determined that the switch (open/closed) states of the fresh air valve and the return air valve are determined by the operating mode of the fresh air system. Thus, the obtaining a switch state of the air valve comprises: determining an operating mode of the fresh air system; and determining a switch state of the fresh air valve and a switch state of the return air valve according to the operating mode.

After a unit of the fresh air system is powered on, the fresh air valve mounted at the fresh air inlet and the return air valve mounted at the exhaust outlet are first reset to a closed position (whether the valves are fully closed is not detected in the reset). Before determining the operating mode of the fresh air system, the method further comprises: resetting the fresh air valve and the return air valve to the closed state. Thereafter, if the fresh air system is turned on by a user, the fresh air system will first run in the external circulation mode for a period (such as 5 minutes) (i.e. both the fresh air valve and the return air valve are opened to introduce outdoor air in order to determine which mode it will later run in). Thus, the determining an operating mode of the fresh air system comprises: detecting an operating state of the fresh air system, wherein the operating state at least comprises a power-on state; and determining the operating mode of the fresh air system according to the operating state of the fresh air system, wherein the operating mode is the external circulation mode in a case where the operating state is the power-on state.

When the air valve performs an opening action, change patterns of feedback signal of the photoelectric switch can be roughly divided as follows: Low-High-Low (closed position → partially open position → fully open position), High-Low (partially open position → fully open position), High (stuck in the partially open position), Low (stuck in the closed position or fully open position), Low-High (closed position → partially open position). When the air valve performs a closing action, the change patterns can be roughly divided as follows: Low-High-Low (fully open position → partially open position → closed position), High-Low (partially open position → closed position), High (stuck in the partially open position), Low (stuck in the closed position or fully open position), Low-High (fully open position → partially open position). The following conclusion can be drawn based on the above action positions of the air valve: regardless of whether the air valve performs the opening action or the closing action, the air valve acts in place only if the feedback signal is Low-High- Low or High-Low. Therefore, after the air valves are reset (both air valves are closed after the reset), a detection about whether the air valves are switched in place is performed for the air valves upon the air valves begin to act. A counter is incremented by 1 each time a level change occurs. After actions of the air valves are completed, for each of the air valves, a count value of level changes and a final level state detected by the photoelectric switch in the air valve are determined. If it is determined that the number of times of level changes is greater than or equal to 1 and the final level state of the photoelectric switch is low after the action of the air valve is completed, it is considered that the air valve has been switched in place (fully opened or closed). Otherwise, it is determined that the air valve has a fault.

Specifically, the detecting a voltage signal of a photoelectric switch comprises: detecting a number of times of level changes and a final level state of the first photoelectric switch and a number of times of level changes and a final level state of the second photoelectric switch. The determining whether the fresh air valve and the return air valve are switched in place according to the voltage signal of the first photoelectric switch and the voltage signal of the second photoelectric switch comprises: for each air valve, if the number of times of level changes is greater than or equal to 1 and the final level state is low, determining that the air valve is switched in place(fully opened or closed); otherwise, determining that the air valve has a fault. Specifically, if the number of times of level changes of the first photoelectric switch is greater than or equal to 1 and the final level state of the first photoelectric switch is low, it is determined that the fresh air valve is switched in place; otherwise, it is determined that the fresh air valve has a fault; if the number of times of level changes of the second photoelectric switch is greater than or equal to 1 and the final level state of the second photoelectric switch is low, it is determined that the return air valve is switched in place; otherwise, it is determined that the return air valve has a fault.

In some embodiments, the determination result comprises at least one of Switched in place, Fault. The controlling an operation of the fresh air system according to a determination result comprises: in a case where the fresh air valve and return air valve are switched in place, obtaining an environmental parameter of an indoor environment where the fresh air system is located, wherein the environmental parameter mainly comprises a temperature and a humidity; determining the operating mode of the fresh air system according to the environmental parameter, and controlling switch states of the fresh air valve and the return air valve according to the operating mode, wherein the operating mode further comprises at least an internal circulation mode, and the fresh air system is controlled to enter a standby or shutdown mode in a case where the fresh air valve or the return air valve has a fault. For example, if it is detected that the user has not performed a shutdown operation, the fresh air system may directly enter the internal circulation mode.

In a case where the operating mode is the internal circulation mode, after the controlling switch states of the fresh air valve and the return air valve according to the operating mode, the method further comprises: detecting a voltage signal of the first photoelectric switch and a voltage signal of the second photoelectric switch; and determining whether the fresh air valve and the return air valve are switched in place according to the voltage signal of the first photoelectric switch and the voltage signal of the second photoelectric switch. This process is mainly used to detect whether the fresh air valve and the return air valve are fully closed. Through the above analysis, it can be determined that a principle of detecting whether the fresh air valve and the return air valve are fully closed is the same as that of detecting whether the fresh air valve and the return air valve are fully opened. Therefore, an implementation of detecting a voltage signal of the first photoelectric switch and a voltage signal of the second photoelectric switch; and determining whether the fresh air valve and the return air valve are switched in place according to the voltage signal of the first photoelectric switch and the voltage signal of the second photoelectric switch in the internal circulation mode is the same as that for the external circulation mode.

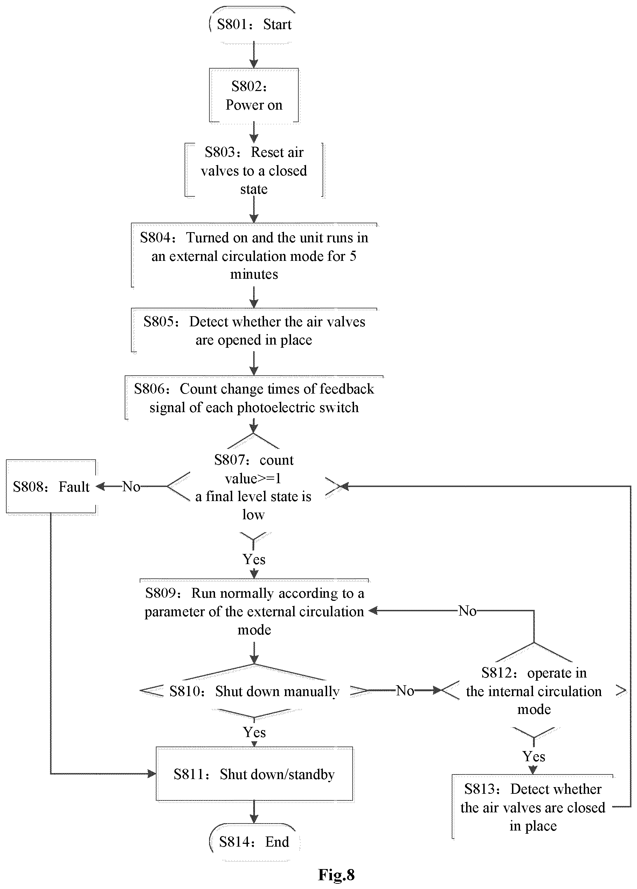

This disclosure further provides some other explanatory embodiments of the method for controlling
a fresh air system. Specifically, FIG. 8 shows a flowchart of a method according to some embodiments of the present disclosure. As shown in FIG. 8, the method comprises steps S801-S814.

The method begins in step S801.

In step S802, a fresh air system is powered on.

In step S803, air valves are reset to a closed state. After a unit of the fresh air system is powered on, a fresh air valve mounted at a fresh air inlet and a return air valve mounted at an exhaust outlet are first reset to the closed state (whether the valves are fully closed is not detected in this reset process).

In step S804, the unit is turned on and the unit runs in an external circulation mode for 5 minutes. In a case where the unit is turned on by a user, it first run in the external circulation mode for 5 minutes (i.e. both the fresh air valve and the return air valve are opened to introduce outdoor air to determine which mode it will later run in).

In step S805, whether the air valves are opened in place (fully opened) is detected. In this step, whether the two air valves are opened in place are determined. Action positions of an air valve are shown in FIGS. 4, 5 and 6 (in this case, the air valve can reach a closed position after reset) or FIGS. 5 and 6 (in this case, the air valve can only reach a partially open position after reset).

In step S806, change times of feedback signal of each photoelectric switch are counted. A Low-High-Low or High-Low signals of the photoelectric switch are received in this process, and a counter is incremented by 1 each time a level change occurs.

In step S807, for each photoelectric switch, whether a count value is greater than or equal to 1 and a final level state is low are determined; if so, the method goes to step S809; otherwise, the method goes to step S808. After actions of the air valves are completed, the count value and the final level state of each photoelectric switch are determined. If the count value is greater than or equal to 1 and the final level state of the photoelectric switch is low, it is considered that the air valve is fully opened. Otherwise, it is determined that the valve cannot be not fully opened.

In step S808, a fault that the air valve which the photoelectric switch disposed on is not switched in place is determined, indicating that the air valve has a switch fault, and then the method proceeds to S811.

In step S809, the fresh air system runs normally according to a parameter of the external circulation mode. After running in an external circulation mode for 5 minutes, whether the fresh air system will run in an internal circulation mode or the external circulation mode is automatically determined based on environmental parameters (temperature, humidity, etc.) of introduced air. If it is determined that the fresh air system will run in the external circulation mode, the fresh air system will continue to run without further actions; If it is determined that the fresh air system will run in the internal circulation mode, the two air valves need to be closed.

In step S810, Whether the fresh air system is shut down manually is determined, that is whether the user shut down the fresh air system during normal operation is determined. If so, the method proceeds to step S811; otherwise, the method proceeds to step S812.

In step S811, the fresh air system is shut down/standby; then, the method goes to step S814.

In step S812, whether the fresh air system operates in the internal circulation mode is determined, if so, the method goes to step S813; otherwise, the method goes to step S809.

In step S813, whether the air valves are closed in place (fully closed) is detected, then, the method goes to step S807. To operate in the internal circulation mode, it is necessary to determine whether the air valves are fully closed. A closing action of an air valve is carried out as shown in FIG. 6 → FIG. 5 → FIG. 4 (in this case, the air valve remains fully open after opened in the external circulation mode) or FIG. 5 → FIG. 4 (in this case, the air valve is pushed to a partially open position by external force after opened in the external circulation mode). A Low-High-Low or High-Low signals of the photoelectric switch are received in this process. As long as the level changes, a counter is incremented by 1. After actions of the air valves are completed, the count value and the final level state of each photoelectric switch are determined. If the count value is greater than or equal to 1 and the final level state of the photoelectric switch is low, it is considered that the air valve is fully closed. Otherwise, it is determined that the valve is not closed in place and the fresh air system switches to the standby or shutdown state.

The method stops in step S814.

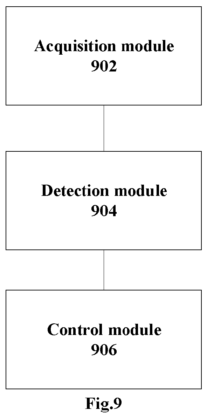

This invention further provides an apparatus for controlling a fresh air system. Specifically, FIG. 9 shows a block diagram of the apparatus according to some embodiments of the present invention. As shown in FIG. 9, the apparatus comprises: an acquisition module 902, a detection module 904, and a control module 906.

The acquisition module 902 is configured to obtain a switch state of the air valve.

The detection module 904 is connected to the acquisition module 902 and is configured to detect a voltage signal of the photoelectric switch, wherein the voltage signal comprise at least a number of times of level changes and a final level state.

The control module 906 is connected to the detection module 904 and is configured to determine whether the air valve is switched in place according to the voltage signal, and control an operation of the fresh air system according to a determination result.

In the above embodiment, a scheme for controlling the fresh air system is provided, in which the photoelectric switch is provided for the air valve of the fresh air system; the voltage signal of the photoelectric switch is detected and whether the air valve is switched in place is determined based on the voltage signal. This solution can accurately detect whether the air valve is switched in place with a single photoelectric switch, which can not only solve a problem of short service life of mechanical switches, but also solve a problem of resource waste of multiple photoelectric switches, capable of simply and accurately determining whether the air valve is switched in place and saving costs.

According to the invention, the air valve comprises at least a fresh air valve and a return air valve, and the photoelectric switch comprises at least a first photoelectric switch disposed on the fresh air valve and a second photoelectric switch disposed on the return air valve. The acquisition module 902 comprises: an operating mode determination submodule configured to determine an operating mode of the fresh air system; an switch state determination submodule configured to determine a switch state of the fresh air valve and a switch state of the return air valve according to the operating mode, wherein the operating mode comprises at least an external circulation mode in which the fresh air valve and the return air valve are both in an open state.

The operating mode determination submodule comprises: a detection unit configured to detect an operating state of the fresh air system, wherein the operating state at least comprises a power-on state; a determination unit configured to determine the operating mode of the fresh air system according to the operating state of the fresh air system, wherein the operating mode is the external circulation mode in a case where the operating state is the power-on state.

The control module 906 comprises: a determination submodule configured to determine that the air valve is switched in place if the number of times of level changes is greater than or equal to one and the final level state is low; otherwise, determine that the air valve has a fault.

The control module 906 further comprises:, a control submodule configured to obtain an environmental parameter of an indoor environment where the fresh air system is located, in a case where the fresh air valve and return air valve are switched in place; determine the operating mode of the fresh air system according to the environmental parameter, and control switch states of the fresh air valve and the return air valve according to the operating mode, wherein the operating mode further comprises at least an internal circulation mode in which the fresh air valve and the return air valve are both in a closed state; and control the fresh air system to enter a standby or shutdown mode in a case where the fresh air valve or the return air valve has a fault.

The apparatus further comprises: a detection determination module configured to in a case where the operating mode is the internal circulation mode, after the controlling switch states of the fresh air valve and the return air valve according to the operating mode, detect a voltage signal of the first photoelectric switch and a voltage signal of the second photoelectric switch; and determine whether the fresh air valve and the return air valve are switched in place according to the voltage signal of the first photoelectric switch and the voltage signal of the second photoelectric switch

The acquisition module 902 further comprises: a reset submodule configured to in a case where the operating state is the power-on state, reset the fresh air valve and the return air valve to a closed state before the determining the operating mode of the fresh air system according the operating state.

For the apparatus described in the above embodiment, the specific ways in which the various modules of the apparatus operate have been described in detail in the embodiments of the relevant method, and will not be explained in detail here.

The present invention also provides an air conditioning unit comprising the fresh air system and an apparatus for controlling the fresh air system described in the above embodiments.

In the above embodiment, a control scheme for a fresh air system is provided, in which a photoelectric switch is provided for an air valve of the fresh air system; a voltage signal of the photoelectric switch is detected and whether the air valve is fully opened/closed is determined based on the voltage signal. This solution can accurately detect whether the air valve is fully opened/closed with a single photoelectric switch, which can not only solve the problem of short service life of mechanical switches, but also solve the problem of resource waste of multiple photoelectric switches, capable of simply and accurately determining whether the air valve is fully opened/closed and saving costs.

An embodiment of the present invention further provides a storage medium containing computer executable instructions that, when executed by a computer processor, perform the control method for a fresh air system described above.

In the above embodiment, a control scheme for a fresh air system is provided, in which a photoelectric switch is provided for an air valve of the fresh air system; a voltage signal of the photoelectric switch is detected and whether the air valve is fully opened/closed is determined based on the voltage signal. This solution can accurately detect whether the air valve is fully opened/closed with a single photoelectric switch, which can not only solve the problem of short service life of mechanical switches, but also solve the problem of resource waste of multiple photoelectric switches, capable of simply and accurately determining whether the air valve is fully opened/closed and saving costs.

The present disclosure further provides a control apparatus for the previously described fresh air system,
comprising: a processor; and a memory coupled to the processor for storing instructions that, when executed by the processor, cause the processor to perform the control method of the fresh air system described above.

The present disclosure further provides a computer program, comprising: instructions that, when executed by a processor, cause the processor to perform the method for controlling a fresh air system according to any of the preceding embodiments.

It should be understood that the present invention is not limited to the precise structures that have been described above and shown in the drawings, and that various modifications and changes may be made without departing from the scope of the invention as defined by the attached claims.

## Claims

1. A method for controlling a fresh air system having an air valve equipped with a photoelectric switch, wherein the air valve comprises at least a fresh air valve and a return air valve wherein the photoelectric switch comprises at least a first photoelectric switch disposed on the fresh air valve and a second photoelectric switch disposed on the return air valve, the method comprising:
obtaining a switch state of the air valve (S702);
detecting a voltage signal of the photoelectric switch, wherein the voltage signal comprises at least a number of times of level changes and a final level state (S704); and
determining whether the air valve is switched in place according to the voltage signal, and controlling an operation of the fresh air system according to a determination result (S706), comprising: if the number of times of level changes is greater than or equal to 1 and the final level state is low, determining that the air valve is switched in place, otherwise, determining that the air valve has a fault, and controlling the fresh air system to enter a standby mode or shutdown mode in a case where the fresh air valve or the return air valve has a fault.

2. The method for controlling the fresh air system according to claim 1, wherein the obtaining a switch state of the air valve comprises:
determining an operating mode of the fresh air system; and
determining a switch state of the fresh air valve and a switch state of the return air valve according to the operating mode, wherein the operating mode comprises at least an external circulation mode in which the fresh air valve and the return air valve are both in an open state.

3. The method for controlling the fresh air system according to claim 2, wherein the determining an operating mode of the fresh air system comprises:
detecting an operating state of the fresh air system, wherein the operating state at least comprises a power-on state; and
determining the operating mode of the fresh air system according to the operating state of the fresh air system, wherein the operating mode is the external circulation mode in a case where the operating state is the power-on state.

4. The method for controlling the fresh air system according to claim 1, wherein the controlling an operation of the fresh air system according to a determination result comprises:
in a case where the fresh air valve and return air valve are switched in place, obtaining an environmental parameter of an indoor environment where the fresh air system is located; and
determining the operating mode of the fresh air system according to the environmental parameter, and controlling switch states of the fresh air valve and the return air valve according to the operating mode, wherein the operating mode further comprises at least an internal circulation mode in which the fresh air valve and the return air valve are both in a closed state.

5. The method for controlling the fresh air system according to claim 4, further comprising: in a case where the operating mode is the internal circulation mode, after the controlling switch states of the fresh air valve and the return air valve according to the operating mode,
detecting a voltage signal of the first photoelectric switch and a voltage signal of the second photoelectric switch; and
determining whether the fresh air valve and the return air valve are switched in place according to the voltage signal of the first photoelectric switch and the voltage signal of the second photoelectric switch.

6. The method for controlling the fresh air system according to claim 3, further comprising:
in a case where the operating state is the power-on state, resetting the fresh air valve and the return air valve to a closed state before the determining the operating mode of the fresh air system according the operating state.

7. An apparatus for controlling a fresh air system having an air valve equipped with a photoelectric switch, wherein the air valve comprises at least a fresh air valve and a return air valve, wherein the photoelectric switch comprises at least a first photoelectric switch disposed on the fresh air valve and a second photoelectric switch disposed on the return air valve, wherein the control apparatus comprises:
an acquisition module (902) configured to obtain a switch state of the air valve;
a detection module (904) configured to detect a voltage signal of the photoelectric switch, wherein the voltage signal comprise at least a number of times of level changes and a final level state; and
a control module (906) configured to determine whether the air valve is switched in place according to the voltage signal, and control an operation of the fresh air system according to a determination result, comprising: if the number of times of level changes is greater than or equal to 1 and the final level state is low, determining that the air valve is switched in place, otherwise, determining that the air valve has a fault, and controlling the fresh air system to enter a standby mode or shutdown mode in a case where the fresh air valve or the return air valve has a fault

8. An air conditioning unit, comprising: a fresh air system having an air valve equipped with a photoelectric switch, wherein the air valve comprises at least a fresh air valve and a return air valve and wherein the photoelectric switch comprises at least a first photoelectric switch disposed on the fresh air valve and a second photoelectric switch disposed on the return air valve, the air conditioning unit further comprising an apparatus for controlling the fresh air system according to claim 7.

9. A computer-readable storage medium stored thereon a computer program that, when executed by a processor, causes the processor to implement the method for controlling the fresh air system according to any one of claims 1 to 6.

10. An apparatus for controlling a fresh air system having an air valve equipped with a photoelectric switch, wherein the air valve comprises at least a fresh air valve and a return air valve, and wherein the photoelectric switch comprises at least a first photoelectric switch disposed on the fresh air valve and a second photoelectric switch disposed on the return air valve, the apparatus comprising:
a processor; and
a memory coupled to the processor for storing instructions that, when executed by the processor, cause the processor to perform the method for controlling the fresh air system according to any one of claims 1 to 6.

## Patentansprüche

1. Verfahren zum Steuern eines Frischluftsystems, das ein mit einem photoelektrischen Schalter versehenes Luftventil umfasst, wobei
das Luftventil mindesten ein Frischluftventil und ein Rückluftventil umfasst, wobei der photoelektrische Schalter mindestens einen ersten photoelektrischen Schalter, der an dem Frischluftventil angeordnet ist, und einen zweiten photoelektrischen Schalter, der an dem Rückluftventil angeordnet ist, umfasst, das Verfahren umfassend:
Erhalten eines Schalterzustands des Luftventils (S702);
Erkennen eines Spannungssignals des photoelektrischen Schalters, wobei das Spannungssignal mindestens eine Anzahl von Pegeländerungen und einen abschließenden Pegelzustand umfasst (S704); und
Bestimmen, ob das Luftventil gemäß dem Spannungssignal in Stellung geschaltet ist, und Steuern eines Betriebs des Frischluftsystems gemäß einem Bestimmungsergebnis (S706), umfassend: wenn die Anzahl von Pegeländerungen größer oder gleich 1 ist und der abschließende Pegelzustand niedrig ist, Bestimmen, dass das Luftventil in Stellung geschaltet ist, ansonsten Bestimmen, dass das Luftventil einen Fehler aufweist, und Steuern des Frischluftsystems zum Umschalten in einen Standby-Modus oder Abschaltmodus im Fall, dass das Frischluftventil oder das Rückluftventil einen Fehler aufweist.

2. Verfahren zum Steuern des Frischluftsystems nach Anspruch 1, wobei das Erhalten eines Schalterzustands des Luftventils Folgendes umfasst:
Bestimmen eines Betriebsmodus des Frischluftsystems; und
Bestimmen eines Schalterzustands des Frischluftventils und eines Schalterzustands des Rückluftventils gemäß dem Betriebsmodus, wobei der Betriebsmodus mindestens einen Außenkreislaufmodus umfasst, in dem das Frischluftventil und das Rückluftventil beide in einem offenen Zustand sind.

3. Verfahren zum Steuern des Frischluftsystems nach Anspruch 2, wobei das Bestimmen eines Betriebsmodus des Frischluftsystems Folgendes umfasst:
Erkennen eines Betriebszustands des Frischluftsystems, wobei der Betriebszustand zumindest einen Einschaltzustand umfasst; und
Bestimmen des Betriebsmodus des Frischluftsystems gemäß dem Betriebszustand des Frischluftsystems, wobei in einem Fall, in dem der Betriebszustand der Einschaltzustand ist, der Betriebsmodus der Außenkreislaufmodus ist.

4. Verfahren zum Steuern des Frischluftsystems nach Anspruch 1, wobei das Steuern eines Betriebs des Frischluftsystems gemäß einem Bestimmungsergebnis Folgendes umfasst:
im Fall, dass das Frischluftventil und das Rückluftventil in Stellung geschaltet sind, Erhalten eines Umgebungsparameters einer Innenbereichsumgebung, in der sich das Frischluftsystem befindet; und
Bestimmen des Betriebsmodus des Frischluftsystems gemäß dem Umgebungsparameter und Steuern des Schalterzustands des Frischluftventils und des Rückluftventils gemäß dem Betriebsmodus, wobei der Betriebsmodus ferner mindesten einen Innenkreislaufmodus umfasst, in dem das Frischluftventil und das Rückluftventil beide in einem geschlossenen Zustand sind.

5. Verfahren zum Steuern des Frischluftsystems nach Anspruch 4, ferner umfassend:
im Fall, dass der Betriebsmodus der Innenkreislaufmodus ist, nach dem Steuern des Schalterzustands des Frischluftventils und des Rückluftventils gemäß dem Betriebsmodus,
Erkennen eines Spannungssignals des ersten photoelektrischen Schalters und eines Spannungssignals des zweiten photoelektrischen Schalters; und
Bestimmen, ob das Frischluftventil und das Rückluftventil gemäß dem Spannungssignal des ersten photoelektrischen Schalters und dem Spannungssignal des zweiten photoelektrischen Schalters in Stellung geschaltet sind.

6. Verfahren zum Steuern des Frischluftsystems nach Anspruch 3, ferner umfassend:
im Fall, dass der Betriebszustand der Einschaltzustand ist, Zurücksetzen des Frischluftventils und des Rückluftventils in einen geschlossenen Zustand vor Bestimmen des Betriebsmodus des Frischluftsystems gemäß dem Betriebszustand.

7. Vorrichtung zum Steuern eines Frischluftsystems, das ein mit einem photoelektrischen Schalter versehenes Luftventil umfasst, wobei
das Luftventil mindesten ein Frischluftventil und ein Rückluftventil umfasst, wobei der photoelektrische Schalter mindestens einen ersten photoelektrischen Schalter, der an dem Frischluftventil angeordnet ist, und einen zweiten photoelektrischen Schalter, der an dem Rückluftventil angeordnet ist, umfasst, wobei die Steuervorrichtung Folgendes umfasst:
ein Erfassungsmodul (902), das zum Erhalten eines Schalterzustands des Luftventils konfiguriert ist;
ein Erkennungsmodul (904), das zum Erkennen eines Spannungssignals des photoelektrischen Schalters konfiguriert ist, wobei das Spannungssignal mindestens eine Anzahl von Pegeländerungen und einen abschließenden Pegelzustand umfasst; und
ein Steuermodul (906), das zum Bestimmen, ob das Luftventil gemäß dem Spannungssignal in Stellung geschaltet ist, und zum Steuern eines Betriebs des Frischluftsystems gemäß einem Bestimmungsergebnis konfiguriert ist, umfassend: wenn die Anzahl von Pegeländerungen größer oder gleich 1 ist und der abschließende Pegelzustand niedrig ist, Bestimmen, dass das Luftventil in Stellung geschaltet ist, ansonsten Bestimmen, dass das Luftventil einen Fehler aufweist, und Steuern des Frischluftsystems zum Umschalten in einen Standby-Modus oder Abschaltmodus im Fall, dass das Frischluftventil oder das Rückluftventil einen Fehler aufweist.

8. Klimaanlage, umfassend: ein Frischluftsystem, das ein mit einem photoelektrischen Schalter versehenes Luftventil umfasst, wobei das Luftventil mindesten ein Frischluftventil und ein Rückluftventil umfasst und wobei der photoelektrische Schalter mindestens einen ersten photoelektrischen Schalter, der an dem Frischluftventil angeordnet ist, und einen zweiten photoelektrischen Schalter, der an dem Rückluftventil angeordnet ist, umfasst, wobei die Klimaanlage ferner eine Vorrichtung zum Steuern des Frischluftsystems nach Anspruch 7 umfasst.

9. Computerlesbares Speichermedium, auf dem ein Computerprogramm gespeichert ist, das bei Ausführung durch einen Prozessor den Prozessor zum Implementieren des Verfahrens zum Steuern des Frischluftsystems nach einem der Ansprüche 1 bis 6 veranlasst.

10. Vorrichtung zum Steuern eines Frischluftsystems, das ein mit einem photoelektrischen Schalter versehenes Luftventil umfasst, wobei das Luftventil mindesten ein Frischluftventil und ein Rückluftventil umfasst und wobei der photoelektrische Schalter mindestens einen ersten photoelektrischen Schalter, der an dem Frischluftventil angeordnet ist, und einen zweiten photoelektrischen Schalter, der an dem Rückluftventil angeordnet ist, umfasst, die Vorrichtung umfassend:
einen Prozessor; und
einen mit dem Prozessor gekoppelten Speicher zum Speichern von Anweisungen, die bei Ausführung durch den Prozessor den Prozessor zum Durchführen des Verfahrens zum Steuern des Frischluftsystems nach einem der Ansprüche 1 bis 6 veranlassen.

## Revendications

1. Procédé de contrôle d'un système d'air frais ayant une vanne d'air équipée d'un commutateur photoélectrique, dans lequel
la vanne d'air comprend au moins une vanne d'air frais et une vanne de reprise d'air, dans lequel le commutateur photoélectrique comprend au moins un premier commutateur photoélectrique disposé sur la vanne d'air frais et un deuxième commutateur photoélectrique disposé sur la vanne de reprise d'air, le procédé comprenant :
obtenir un état du commutateur de la vanne d'air (S702) ;
détecter un signal de tension du commutateur photoélectrique, dans lequel le signal de tension comprend au moins un nombre de fois de changements de niveau et un état de niveau final (S704) ; et
déterminer si la vanne d'air est commutée en place conformément au signal de tension, et
contrôler un fonctionnement du système d'air frais conformément à un résultat de la détermination (S706),
comprenant : si le nombre de fois de changements de niveau est supérieur ou égal à 1 et que l'état final est bas, déterminer que la vanne d'air est commutée en place, autrement déterminer que la vanne d'air présente un défaut, et contrôler le système d'air frais pour qu'il entre dans un mode de veille ou un mode d'arrêt dans un cas dans lequel la vanne d'air frais ou la vanne de reprise d'air présente un défaut.

2. Procédé de contrôle du système d'air frais selon la revendication 1, dans lequel
obtenir un état du commutateur de la vanne d'air comprend :
déterminer un mode de fonctionnement du système d'air frais ; et
déterminer un état du commutateur de la vanne d'air frais et un état du commutateur de la vanne de reprise d'air conformément au mode de fonctionnement, dans lequel le mode de fonctionnement comprend au moins un mode de circulation externe dans lequel la vanne d'air frais et la vanne de reprise d'air sont toutes les deux dans un état ouvert.

3. Procédé de contrôle du système d'air frais selon la revendication 2, dans lequel
déterminer un mode de fonctionnement du système d'air frais comprend :
détecter un état de fonctionnement du système d'air frais, dans lequel l'état de fonctionnement comprend au moins un état de mise sous tension ; et
déterminer le mode de fonctionnement du système d'air frais conformément à l'état de fonctionnement du système d'air frais, dans lequel le mode de fonctionnement est le mode de circulation externe dans un cas dans lequel l'état de fonctionnement est l'état de mise sous tension.

4. Procédé de contrôle du système d'air frais selon la revendication 1, dans lequel
contrôler un fonctionnement du système d'air frais conformément à un résultat de la détermination comprend :
dans un cas dans lequel la vanne d'air frais et la vanne de reprise d'air sont commutées en place, obtenir un paramètre environnemental d'un environnement intérieur dans lequel le système d'air frais est situé ; et
déterminer le mode de fonctionnement du système d'air frais conformément au paramètre environnemental, et contrôler des états du commutateur de la vanne d'air frais et de la vanne de reprise d'air conformément au paramètre environnemental, et contrôler des états du commutateur de la vanne d'air frais et de la vanne de reprise d'air conformément au mode de fonctionnement, dans lequel le mode de fonctionnement comprend en outre au moins un mode de circulation interne dans lequel la vanne d'air frais et la vanne de reprise d'air sont toutes les deux dans un état fermé.

5. Procédé de contrôle du système d'air frais selon la revendication 4, comprenant en outre :
dans un cas dans lequel le mode de fonctionnement est le mode de circulation interne, après avoir contrôlé les états du commutateur de la vanne d'air frais et de la vanne de reprise d'air conformément au mode de fonctionnement,
détecter un signal de tension du premier commutateur photoélectrique et un signal de tension du deuxième commutateur photoélectrique ; et
déterminer si la vanne d'air frais et la vanne de reprise d'air sont commutées en place conformément au signal de tension du premier commutateur photoélectrique et au signal de tension du deuxième commutateur photoélectrique.

6. Procédé de contrôle du système d'air frais selon la revendication 3, comprenant en outre :
dans un cas dans lequel l'état de fonctionnement est l'état de mise sous tension, réinitialiser la vanne d'air frais et la vanne de reprise d'air à un état fermé avant de déterminer le mode de fonctionnement du système d'air frais conformément à l'état de fonctionnement.

7. Appareil de contrôle d'un système d'air frais ayant une vanne d'air équipée d'un commutateur photoélectrique, dans lequel
la vanne d'air comprend au moins une vanne d'air frais et une vanne de reprise d'air,
dans lequel le commutateur photoélectrique comprend au moins un premier commutateur photoélectrique disposé sur la vanne d'air frais et un deuxième commutateur photoélectrique disposé sur la vanne de reprise d'air,
où l'appareil de contrôle comprend :
un module d'acquisition (902) configuré pour obtenir un état du commutateur de la vanne d'air ;
un module de détection (904) configuré pour détecter un signal de tension du commutateur photoélectrique,
dans lequel le signal de tension comprend au moins un nombre de fois de changements de niveau et un état de niveau final ; et
un module de contrôle (906) configuré pour déterminer si la vanne d'air est commutée en place conformément au signal de tension, et contrôler un fonctionnement du système d'air frais conformément à un résultat de la détermination, comprenant : si le nombre de fois de changements de niveau est supérieur ou égal à 1 et que l'état de niveau final est bas, déterminer que la vanne d'air est commutée en place, autrement déterminer que la vanne d'air présente un défaut, et contrôler le système d'air frais pour qu'il entre dans un mode de veille ou dans un mode d'arrêt dans un cas dans lequel la vanne d'air frais ou la vanne de reprise d'air présente un défaut.

8. Unité de climatisation, comprenant un système d'air frais ayant une vanne d'air équipée d'un commutateur photoélectrique, dans laquelle la vanne d'air comprend au moins une vanne d'air frais et une vanne de reprise d'air et dans laquelle le commutateur photoélectrique comprend au moins un premier commutateur photoélectrique disposé sur la vanne d'air frais et un deuxième commutateur photoélectrique disposé sur la vanne de reprise d'air, l'unité de climatisation comprenant en outre un appareil de contrôle du système d'air frais selon la revendication 7.

9. Support de stockage lisible par ordinateur ayant stocké dessus un programme informatique qui, lorsque exécuté par un processeur, fait que le processeur met en œuvre le procédé de contrôle du système d'air frais selon l'une quelconque des revendications 1 à 6.

10. Appareil de contrôle d'un système d'air frais ayant une vanne d'air équipée d'un commutateur photoélectrique, dans lequel la vanne d'air comprend au moins une vanne d'air frais et une vanne de reprise d'air, et dans lequel le commutateur photoélectrique comprend au moins un premier commutateur photoélectrique disposé sur la vanne d'air frais et un deuxième commutateur photoélectrique disposé sur la vanne de reprise d'air, l'appareil comprenant :
un processeur ; et
une mémoire couplée au processeur pour stocker des instructions qui, lorsque exécutées par le processeur, font que le processeur met en œuvre le procédé de contrôle du système d'air frais selon l'une quelconque des revendications 1 à 6.
